# FASCICULE DE BREVET EUROPEEN

(11) **EP 1 522 748 B1**
(45) Date de publication et mention de la délivrance du brevet: **28.06.2006**
(21) Numéro de dépôt: 04354034.3
(22) Date de dépôt: 22.09.2004
(51) Int. Cl.: F16B 45/02

(54) **Mousqueton porte-accessoires**
Karabinerhaken mit zusätzlicher Haltefunktion
Snap hook with additional carrying function

(30) Priorité: 06.10.2003 FR 0311658
(43) Date de publication de la demande: 13.04.2005
(73) Titulaire: ZEDEL, 38920 Crolles (FR)
(72) Inventeur: Petzl, Paul, 38530 Barraux (FR); Bauvois, Anne, 38570 Hurtieres (FR); Maurice, Alain, 38660 Saint Hilaire du Touvet (FR)
(74) Mandataire: Hecké, Gérard

(56) Documents cités:
- DE-U- 20 108 512
- US-A- 3 090 826
- US-A- 5 187 844
- US-A- 5 384 943

## Description

### Domaine technique de l'invention

L'invention concerne un mousqueton destiné à être utilisé en escalade et pour les travaux en hauteurs, et comprenant un corps en forme de crochet pour l'accrochage d'une pluralité d'accessoires d'assurance, un doigt mobile articulé à l'une des extrémités du corps pour fermer ou ouvrir le passage d'accès du crochet, et des moyens de rappel sollicitant le doigt vers la position de fermeture (DE 201 08 512 4).

### État de la technique

En escalade et alpinisme, les grimpeurs ont l'habitude d'accrocher différents types d'accessoires à un mousqueton de portage solidaire de la ceinture du harnais ou du cuissard. En fonction du type de voie à escalader, les accessoires peuvent être des dégaines, descendeurs, bloqueurs, broches à glace, pitons, coinceurs, etc. Le passage avec jeu du mousqueton de portage autour de la ceinture, est susceptible d'entraîner des mouvements de basculement plus ou moins prononcés lors de la progression du grimpeur dans la voie. Le désagrément occasionné par ces mouvements de basculement devient même gênant pour le grimpeur en fonction du poids des accessoires emportés.

### Objet de l'invention

L'invention a pour but de remédier à ces inconvénients, et a pour objet de réaliser un mousqueton porte accessoires évitant tout mouvement relatif de déplacement autour de la ceinture sur laquelle il est accroché.

Selon l'invention, ce but est atteint par le fait que le corps du mousqueton est équipé d'une patte de retenue attachée à la partie supérieure et s'étendant en regard de la branche latérale à l'opposé du doigt, de manière à définir une rainure destinée à être insérée sur un élément support pour assurer l'immobilisation du mousqueton.

Selon un mode de réalisation préférentiel, la patte de retenue présente une longueur inférieure à celle de la branche latérale du corps. La rainure délimitée par la patte de retenue possède une épaisseur sensiblement uniforme, l'extrémité libre de la patte de retenue étant incurvée pour faciliter l'insertion sur l'élément de support après ouverture du doigt mobile.

De préférence, l'axe d'articulation du doigt mobile est situé à l'extrémité de la partie supérieure du corps, et la partie supérieure du corps comporte une surface de support externe sensiblement plane pour le rangement provisoire des accessoires après ouverture du doigt. De plus, la surface de support externe est dotée d'une pluralité de nervures pour le positionnement côte à côte des accessoires.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
- la figure 1 est une vue en élévation du mousqueton selon l'invention, le doigt mobile étant représenté en position de fermeture ;
- la figure 2 est une vue identique de la figure 1 en position d'ouverture du doigt ;
- la figure 3 montre une vue de dessus de la figure 1;
- la figure 4 illustre une vue de profil de la figure 1.

### Description d'un mode de réalisation préférentiel

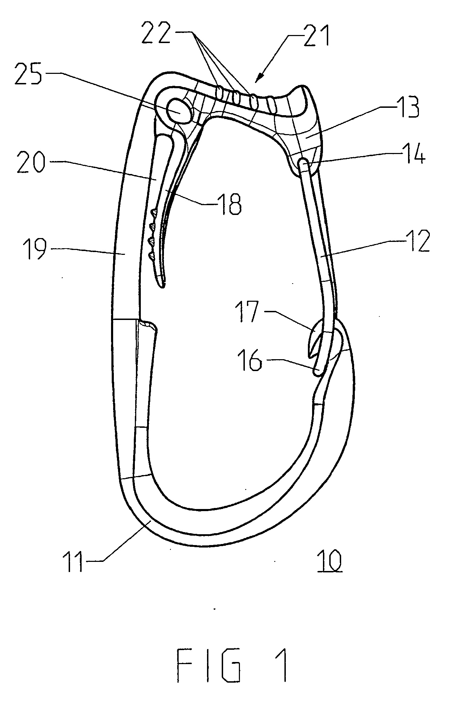

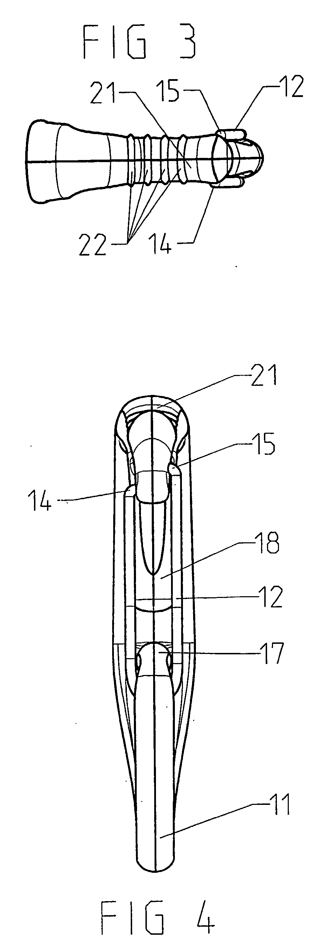

Sur les figures 1 à 4, un mousqueton 10 utilisé pour le portage d'accessoires d'assurance, comporte un corps 11 en forme de crochet et un doigt 12 mobile articulé à l'une des extrémités 13 du corps 11 pour fermer ou ouvrir l'ouverture d'accès du crochet.

À titre d'exemple, le doigt 12 est réalisé en fil d'acier conformé selon une épingle. Elle est dotée de deux ergots 14, 15 recourbés en équerre et introduits dans des orifices décalés, ménagés à la partie supérieure dans l'extrémité 13. Le doigt 12 comporte de plus une tête d'accrochage 16 coopérant en position de fermeture avec l'extrémité inférieure 17 du corps 11. Le montage excentré des ergots 14, 15 constitue un moyen de rappel élastique du doigt 12 vers la position de fermeture.

A l'intérieur du corps 11, se trouve une patte de retenue 18 attachée à la partie supérieure du corps 11, et s'étendant en regard de la branche latérale 19 à l'opposé du doigt 12. La patte de retenue 18 possède une longueur inférieure à celle de la branche latérale 19, et définit avec celle-ci une rainure 20. L'épaisseur de la rainure 20 est sensiblement uniforme, de manière à permettre l'insertion de la patte de retenue 18 sur un élément support (non représenté), par exemple, une ceinture ou un harnais.

L'extrémité de la patte de retenue 18 est avantageusement incurvée pour faciliter la mise en place sur l'élément support.

La partie supérieure du corps 11 comporte une surface de support 21 externe sensiblement plane pour autoriser le rangement provisoire des accessoires après ouverture du doigt 12. De préférence, la surface de support 21 est équipée d'une pluralité de nervures 22 pour le rangement côte à côte des accessoires.

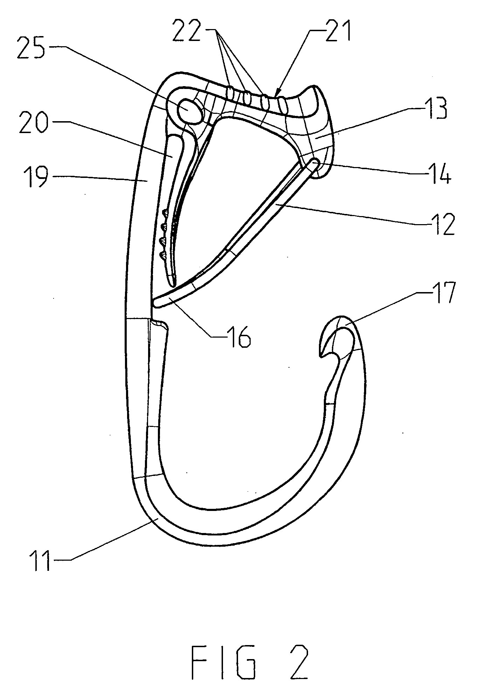

L'axe d'articulation du doigt 12 mobile est agencé avantageusement à la partie supérieure du corps, et l'ouverture s'effectue vers l'intérieur du corps 11 sans que le doigt 12 vienne en butée contre la patte de retenue 1 (figure 2).

Un trou 25 est ménagé dans la partie supérieure du corps 11 pour autoriser l'accrochage d'une ficelle destinée à sécuriser les accessoires et outils transportés.

## Revendications

1. Mousqueton destiné à être utilisé en escalade et pour les travaux en hauteurs, comprenant un corps (11) en forme de crochet permettant d'accrocher une pluralité d'accessoires d'assurance, un doigt (12) mobile articulé à l'une des extrémités (13) du corps pour fermer ou ouvrir le passage d'accès du crochet, et des moyens de rappel sollicitant le doigt (12) vers la position de fermeture,
**caractérisé en ce que** le corps (11) est équipé d'une patte de retenue (18) attachée à la partie supérieure et s'étendant en regard de la branche latérale (19) à l'opposé du doigt (12), de manière à définir une rainure (20) destinée à être insérée sur un élément support pour assurer l'immobilisation du corps (11).

2. Mousqueton selon la revendication 1, **caractérisé en ce que** la patte de retenue (18) présente une longueur inférieure à celle de la branche latérale (19) du corps (11).

3. Mousqueton selon la revendication 2, **caractérisé en ce que** la rainure (20) délimitée par la patte de retenue (18) possède une épaisseur sensiblement uniforme.

4. Mousqueton selon la revendication 3, **caractérisé en ce que** l'extrémité libre de la patte de retenue, située à l'opposé de son point d'attache, est incurvée pour faciliter l'insertion sur l'élément de support après ouverture du doigt (12) mobile.

5. Mousqueton selon la revendication 1, **caractérisé en ce que** l'axe d'articulation du doigt (12) mobile est situé à l'extrémité (13) de la partie supérieure du corps (11).

6. Mousqueton selon la revendication 1, **caractérisé en ce que** la partie supérieure du corps (11) comporte une surface de support (21) externe sensiblement plane pour le rangement provisoire des accessoires après ouverture du doigt (12).

7. Mousqueton selon la revendication 6, **caractérisé en ce que** la surface de support (21) externe est dotée d'une pluralité de nervures (22) pour le positionnement côte à côte des accessoires.

8. Mousqueton selon l'une des revendications précédentes, **caractérisé en ce que** le doigt (12) mobile est réalisé en fil d'acier, le déplacement vers la position d'ouverture s'effectuant vers l'intérieur du corps (11) sans venir en butée contre la patte de retenue (18).

9. Mousqueton selon l'une des revendications précédentes, **caractérisé en ce qu'**un trou (25) est ménagé dans la partie supérieure du corps (11) du côté de la patte de retenue (18) pour l'accrochage d'une ficelle.

## Claims

1. A snap-hook designed to be used for climbing and for working at heights, comprising a body (11) in the form of a hook for hooking a plurality of belaying accessories thereon, a movable finger (12) articulated on one of the ends (13) of the body to close or open the access passage of the hook, and return means biasing the finger (12) to the closed position,
**characterized in that** the body (11) is equipped with a guard lug (18) attached to the top part and extending facing the lateral branch (19) opposite the finger (12) so as to define a groove (20) designed to be inserted on a support element to achieve immobilization of the snap-hook (11).

2. Snap-hook according to claim 1, **characterized in that** the guard lug (18) presents a smaller length than that of the lateral branch (19) of the body (11).

3. Snap-hook according to claim 2, **characterized in that** the groove (20) bounded by the guard lug (18) has a substantially uniform thickness.

4. Snap-hook according to claim 3, **characterized in that** the free end of the guard lug (18), located opposite its attachment point, is curved for ease of insertion on the support element after the movable finger (12) has been opened.

5. Snap-hook according to claim 1, **characterized in that** the pivoting pin of the movable finger (12) is situated at the end (13) of the top part of the body (11).

6. Snap-hook according to claim 1, **characterized in that** the top part of the body (11) comprises a substantially flat external support surface (21) for provisional placing of the accessories after the finger (12) has been opened.

7. Snap-hook according to claim 6, wherein the external support surface (21) is provided with a plurality of ribs (22) for placing the accessories side by side.

8. Snap-hook according to one of the foregoing claims, **characterized in that** the movable finger (12) is made of steel wire, movement to the open position taking place towards the inside of the body (11) without coming up against the stop formed by the guard lug (18).

9. Snap-hook according to one of the foregoing claims, **characterized in that** a hole (25) is provided in the top part of the body (11) on the same side as the guard lug (18) for attachment of a piece of string.

## Patentansprüche

1. Karabinerhaken zum Klettern und für Höhenarbeiten, der folgendes umfasst:
- einen Körper (11) in der Form eines Hakens, der es erlaubt eine Mehrzahl von Sicherheits-Accessoires anzuhängen,
- einen beweglichen Finger (12), der mit einem Gelenk an einem der Enden (13) des Körpers angeordnet ist, um die Zugangsöffnung des Hakens zu schließen oder zu öffnen,
- und Rückstellmittel zum treiben des Fingers (12) in die Verschlussstellung,
**dadurch gekennzeichnet dass** der Körper (11) mit einer Rückhaltezunge (18) ausgestattet ist, die am Oberteil befestigt ist und sich entlang des, dem Finger (12) gegenüberliegenden, Seitenbügels (19) erstreckt, sodass eine Rille (20) definiert wird, die dazu bestimmt ist auf ein Trägerelement aufgesteckt zu werden, um die Ruhigstellung des Körpers (11) abzusichern.

2. Karabinerhaken gemäß Anspruch 1, **dadurch gekennzeichnet dass** die Rückhaltezunge (18) eine Länge aufweist, die kleiner als die Länge des Seitenbügels (19) des Körpers (11) ist.

3. Karabinerhaken gemäß Anspruch 2, **dadurch gekennzeichnet dass** die Rille (20), die von der Rückhaltezunge (18) begrenzt ist, eine in etwa gleichförmige Dicke besitzt.

4. Karabinerhaken gemäß Anspruch 3, **dadurch gekennzeichnet dass** das freie Ende der Rückhaltezunge, das sich gegenüber ihrem Befestigungspunkt befindet, abgerundet ist um das Aufstecken auf das Trägerelement nach dem öffnen des beweglichen Fingers (12) zu erleichtern.

5. Karabinerhaken gemäß Anspruch 1, **dadurch gekennzeichnet dass** die Gelenkachse des beweglichen Fingers (12) am Ende (13) des Oberteils des Körpers (11) angeordnet ist.

6. Karabinerhaken gemäß Anspruch 1, **dadurch gekennzeichnet dass** der Oberteil des Körpers (11) eine äußere Trägerfläche (21) umfasst, die in etwa eben ist, um das provisorische Wegräumen der Accessoires nach dem öffnen des beweglichen Fingers (12) zu ermöglichen.

7. Karabinerhaken gemäß Anspruch 6, **dadurch gekennzeichnet dass** die äußere Trägerfläche (21) eine Mehrzahl von Rippen (22) umfasst (22), um die Accessoires Seite an Seite anzuordnen.

8. Karabinerhaken gemäß einem der vorhergehenden Ansprüche, **dadurch gekennzeichnet dass** der bewegliche Finger (12) aus einem Stahldraht gemacht ist, wobei die Bewegung in die offene Stellung zum Inneren des Körpers (11) durchgeführt wird, ohne gegen die Rückhaltezunge (18) anzuschlagen.

9. Karabinerhaken gemäß einem der vorhergehenden Ansprüche, **dadurch gekennzeichnet dass** ein Loch (25) in dem Oberteil des Körpers (11) bei der Rückhaltezunge (18) eingefügt ist, um eine Kordel zu befestigen.
